Europäisches Patentamt

European Patent Office

Office européen des brevets

(19)

(11) Numéro de publication: **0 186 562**
**B1**

(12) # FASCICULE DE BREVET EUROPEEN

(45) Date de publication du fascicule du brevet:
**05.07.89**

(21) Numéro de dépôt: **85402390.0**

(22) Date de dépôt: **03.12.85**

(51) Int. Cl.⁴: **F 16 B  13/02, F 16 B  19/00,**
**F 16 L  59/12, E 04 F  13/08**

(54) **Cheville de fixation.**

(30) Priorité: **05.12.84  FR 8418512**

(43) Date de publication de la demande:
**02.07.86 Bulletin 86/27**

(45) Mention de la délivrance du brevet:
**05.07.89 Bulletin 89/27**

(84) Etats contractants désignés:
**BE DE GB IT NL**

(56) Documents cités:
**DE-C- 952 576**
**GB-A- 682 577**
**GB-A- 1 144 927**

(73) Titulaire: **ILLINOIS TOOL WORKS INC., 8501 West Higgins Road, Chicago Illinois 60631-2887 (US)**

(72) Inventeur: **Ollivier, Jean, 31, rue Georges Bonnet, F-26000 Valence (Drôme) (FR)**
Inventeur: **Almeras, Roland, 15, rue du Général Chapelle, F-07300 Tournon (Ardèche) (FR)**

(74) Mandataire: **Bloch, Robert et al, 2, square de l'Avenue du Bois, F-75116 Paris (FR)**

ACTORUM AG

## Description

La présente invention concerne une cheville, notamment pour la fixation de plaques d'isolation, comprenant un corps élastique de forme générale tubulaire, de longueur notablement plus grande que le diamètre, pourvu d'une fente longitudinale à deux lèvres et, à l'une des extrémités du corps et solidaire de celui-ci, des moyens d'appui, par exemple sertis.

Une telle cheville est utilisée pour la fixation, par exemple, d'une plaque d'isolation à un matériau récepteur.

Après perçage dans le matériau récepteur d'un trou de diamètre légèrement inférieur à celui du corps de la cheville, et, à travers la plaque d'isolation, on introduit, par frappe au marteau, la cheville dans le trou, par son extrémité opposée aux moyens d'appui, jusqu'à ce que les moyens d'appui viennent en butée contre la plaque. Au cours de la pénétration du corps dans le trou, les lèvres de la fente sont resserrées, ce qui met le corps élastique sous tension et confère à la cheville ses performances à l'arrachement en traction directe.

On connaît déjà de telles chevilles. Elles sont réalisées à partir d'une tôle, roulée à un diamètre extérieur libre sensiblement plus grand que les diamètres nominaux de perçage.

Il peut s'agir d'une tôle épaisse qui, une fois roulée, est soumise à un traitement thermique, ce qui exclut certains matériaux.

Il peut s'agir aussi d'une tôle plus fine, alors en acier galvanisé ou inoxydable. Ces chevilles en tôle fine, disponibles sur le marché, possèdent une fente longitudinale ménagée entre deux lèvres rabattues vers l'intérieur pour mieux absorber les variations éventuelles des diamètres de perçage.

Mais les performances de ces deux types de chevilles laissent à désirer.

Certes, la cheville du document DE-C 952 576, du type mentionné ci-dessus, comporte des languettes, servant de butées, inclinées sur l'axe de la cheville et obtenues par poinçonnage de certaines parties du corps. Toutefois, les languettes de cette cheville sont extérieures au corps et servent uniquement de griffes pour saisir la plaque d'isolation à fixer et le matériau récepteur.

La présente invention vise donc à proposer une cheville du type mentionné ci-dessus dont le rapport qualité sur prix soit satisfaisant.

A cet effet, la présente invention concerne une cheville de fixation comprenant un corps élastique de forme générale tubulaire pourvu d'une fente longitudinale à deux lèvres, à l'une des extrémités du corps et solidaire de celui-ci, des moyens d'appui dans une portion de la fente, s'étendant au moins depuis l'autre des extrémités du corps sur une portion de sa longueur, au moins une languette, inclinée sur l'axe de la cheville, obtenue par poinçonnage de la partie du corps sensiblement diamétralement opposée à ladite portion de fente, conformée pour pouvoir être déformée transversalement, et s'étendant dans cette portion de fente de largeur, entre les deux lèvres, déterminée à cet effet, pour servir de butée à ces lèvres.

Lors de l'introduction de la cheville dans un trou de perçage, la languette s'oppose au resserrement des lèvres de la portion de fente qui viennent en butée dessus, ce qui augmente la pression de contact du corps de cheville contre la paroi du matériau, et donc les performances à l'arrachement.

Bien sûr, la languette peut faire saillie hors de la surface enveloppe du corps et assurer ainsi, lors de l'introduction, une fonction d'anti-retour.

L'invention sera mieux comprise à l'aide de la description suivante d'une forme de réalisation préférée de la cheville de l'invention, en référence aux dessins annexés, sur lesquels:

– la figure 1 représente une vue en coupe axiale de la cheville de l'invention;
– la figure 2 représente une vue en coupe transversale de la cheville de la figure 1 selon la ligne II–II, à l'état libre, et à plus grande échelle;
– la figure 3 représente une vue analogue à celle de la figure 2, mais après mise en place de la cheville;
– la figure 4 représente une vue en coupe transversale d'une languette de butée, et
– la figure 5 représente une vue en coupe transversale d'une variante de réalisation d'une languette de butée.

La cheville représentée sur les dessins comporte un corps 1, de forme générale tubulaire, dont la longueur est notablement plus grande que le diamètre, avec une portion de support 2 et une portion d'ancrage 3.

A l'extrémité libre de la portion de support 2, le corps est rabattu vers l'extérieur en forme de collerette 4, pour la solidarisation, par exemple par sertissage, d'une rondelle d'appui 5.

Ainsi, après avoir percé un trou d'ancrage dans un matériau récepteur et un orifice de passage dans une plaque, par exemple d'isolation, à fixer au matériau récepteur et d'épaisseur au plus égale à la longueur de la portion de support 2 de la cheville, et après la pose de la plaque contre le matériau support et on introduit, à travers l'orifice de passage de la plaque, la cheville dans le trou d'ancrage, de diamètre légèrement inférieur à celui de la cheville. Une fois ancrée, l'élément d'isolation est plaqué contre le matériau par la rondelle d'appui 5.

A l'extrémité libre 6 de la portion d'ancrage 3, le corps présente la forme d'un cône pour faciliter son introduction dans le trou de perçage.

Le corps 1 de la cheville a été réalisé à partir d'une tôle en acier, galvanisé ou inoxydable, au moins légèrement élastique, ensuite roulée. Développée, cette tôle de départ présentait une surface conformée pour que, une fois roulée, le corps présente une fente longitudinale s'étendant sur toute sa longueur, depuis le cône 6 jusqu'à la collerette 4. Ici, le long de la portion de support 2, la largeur de la portion de la fente 7, entre deux lèvres 8, 9, est sensiblement égale à celle de la portion de fente 10 de la portion d'ancrage 3, entre deux lèvres 11, 12. Les lèvres 11, 12 sont rabattues vers l'intérieur suivant un plan perpendiculaire au plan de symétrie de la cheville.

Toujours avant d'être roulée, la tôle de départ avait été poinçonnée pour, une fois roulée, dégager, depuis des parties 18, 19 du corps diamétralement opposées à la partie médiane de la fente 10, ici deux languettes de butée 13, 14, inclinées vers l'intérieur d'un certain angle sur l'axe 15 de la cheville, leurs extrémités libres 16, 17 étant tournées vers la rondelle d'appui 5, et pour ménager deux ouvertures oblongues 20, 21.

A l'état libre ou de repos, c'est-à-dire avant introduction de la cheville dans le trou d'ancrage, l'angle d'inclinaison des languettes 13, 14 est tel qu'elles font légèrement saillie hors de la surface fictive enveloppe du corps, donc aussi hors des portions de fente 7 et 10.

Au cours de l'introduction, les languettes 13, 14 frottent contre la paroi du trou d'ancrage, tout en étant légèrement rabattues vers l'axe de la cheville, et assurent un rôle d'anti-retour.

Lors de l'enfoncement de la cheville dans le trou de perçage, sur la longueur de la portion d'ancrage 3, les lèvres 11 et 12 sont resserrées et rapprochées l'une de l'autre jusqu'à venir en butée contre les languettes 13, 14, avant de les déformer transversalement, empêchant ainsi un resserrement des lèvres trop poussé pour maintenir la pression de contact appropriée contre la paroi du trou d'ancrage. Après mise en place, la portion de fente 7 est légèrment refermée.

La surface développée de la tôle de départ du corps de la cheville est calculée pour que, à l'ancrage, les lèvres 11, 12 non seulement viennent en appui contre les extrémités libres des languettes mais puissent aussi les déformer.

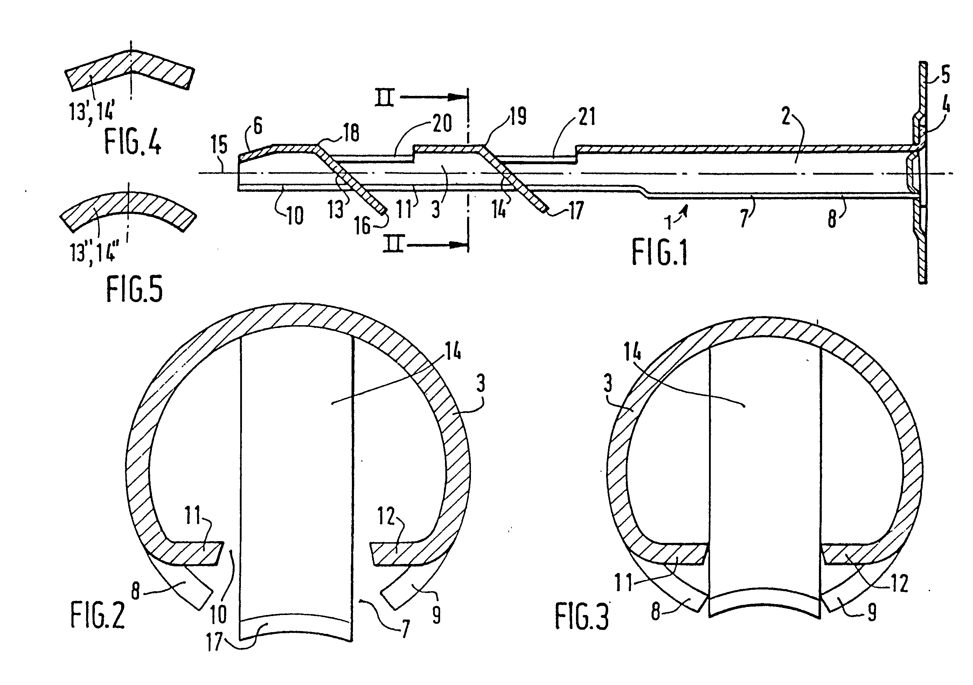

Pour mieux absorber les variations de diamètres des trous d'ancrage, les languettes ont, à l'origine, une section incurvée, soit courbe, comme les languettes 13″, 14″ de la figure 5, soit en forme de dièdre, comme les languettes 13′, 14′ de la figure 4, avec leur concavité tournée soit vers la portion de fente 10, soit à l'opposé, pour pouvoir mieux subir la déformation transversale.

On a décrit une cheville à portion de fente d'ancrage à lèvres rabattues. Il est clair qu'il ne s'agit pas ici d'une caractéristique limitative de l'invention, pas plus d'ailleurs que la forme ou la conformation des fentes, qui, dans la représentation décrite ci-dessus, ont des bords ou lèvres de butée parallèles.

En outre, il pourrait être prévu, le long des lèvres des portions de fentes, des décrochements assurant à leur tour un rôle de butée, mais suivant la direction axiale de la cheville, pour les languettes et parfaire ainsi la fonction antiretour évoquée ci-dessus.

Enfin, la cheville de l'invention pourrait aussi être réalisée suivant d'autres techniques, comme par exemple le moulage ou l'injection.

## Revendication

Cheville de fixation comprenant un corps élastique (1) de forme générale tubulaire pourvu d'une fente longitudinale (7, 10) à deux lèvres (11, 12), à l'une des extrémités du corps et solidaire de celui-ci, des moyens d'appui (4, 5), dans une portion (10) de la fente, s'étendant au moins depuis l'autre (6) des extrémités du corps sur une portion (3) de sa longueur, au moins une languette (13, 14), inclinée sur l'axe (15) de la cheville, obtenue par poinçonnage de la partie du corps sensiblement diamétralement opposée à ladite portion de fente (10), conformée pour pouvoir être déformée transversalement, et s'étendant dans cette portion de fente (10) de largeur, entre les deux lèvres (11, 12), déterminée à cet effet, pour servir de butée à ces lèvres (11, 12).

## Patentanspruch

Befestigungsdübel, enthaltend einen im wesentlichen rohrförmigen, elastischen Körper (1), der mit einem von zwei Lippen (11, 12) begrenzten Längsschlitz (7, 10) versehen ist, an einem Ende des Körpers angeordnete und fest damit verbundene Anschlagorgane (4, 5), mindestens eine gegenüber der Achse (15) des Dübels schräg gestellte Zunge (13, 14), die sich in einem Abschnitt (10) des Schlitzes über einen Abschnitt (3) der Länge des Körpers mindestens von dem anderen Körperende (6) erstreckt und durch Stanzen aus der diesem Schlitzabschnitt (10) im wesentlichen diametral gegenüberliegenden Seite des Körpers derart gebildet ist, dass sie in Querrichtung herumgebogen werden kann und sich in diesen Abschnitt (10) des Schlitzes mit einer Breite zwischen die beiden Lippen (11, 12), erstreckt, die dazu gewählt ist, um als Anschlag für diese Lippen (11, 12) zu dienen.

## Claim

Fastening plug comprising a resilient body (1) with a generally tubular shape provided with a longitudinal slot (7, 10) having two lips (11, 12), at one end of the body and integral therewith, abutment means (4, 5), in a portion (10) of the slot, extending at least from the other end (6) of the body over a portion (3) of its length, at least a tongue (13, 14), inclined with respect to the axis (15) of the plug, obtained by punching the part of the body roughly diametrally opposed to said slot portion (10), shaped that it can be transversely deformed, and extending in this slot portion (10) having a width, between the two lips (11, 12), determined to this effect, to be used as stop member for these lips (11, 12).

FIG.1

FIG.2

FIG.3

FIG.4

FIG.5